# EUROPEAN PATENT APPLICATION

(11) **EP 4 307 463 A1**
(43) Date of publication of application: **17.01.2024**
(21) Application number: 22914372.2
(22) Date of filing: 19.12.2022
(51) Int. Cl.: H01M 50/552

(54) **BATTERY**

(30) Priority: 29.12.2021 CN 202123391744 U
(71) Applicant: Zhuhai Cosmx Power Supply Co., Ltd., Guangdong 519100 (CN)
(72) Inventor: LIN, Changquan, Zhuhai, Guangdong 519100 (CN); DENG, Jiadong, Zhuhai, Guangdong 519100 (CN); YI, Guogao, Zhuhai, Guangdong 519100 (CN)
(74) Representative: Gill Jennings & Every LLP
(86) International application number: PCT/CN2022/140114
(87) International publication number: WO 2023/125118

(57) **Abstract**

The present application provides a battery, which relates to the technical field of energy storage batteries and is used for solving a problem of inconvenient repair and replacement of conductor terminals of the battery. The battery of the present application includes a lower case, a battery cell, a conductive member, an upper cover and a conductor terminal; the lower case is provided with an accommodating cavity with an opening, the battery cell is disposed within the accommodating cavity, the conductive member is electrically connected with the battery cell, the upper cover is covered on the lower case and seals the opening, the upper cover is provided with a through hole, and the conductive member passes through the through hole and extends out of the accommodating cavity; the conductor terminal is detachably disposed on the conductive member; the conductor terminal includes a connection portion and an extension portion, which are located at two ends of the conductor terminal, respectively, the connection portion is inserted into the through hole, and the extension portion extends in a direction away from the upper cover. Thus, it is convenient to disassemble the conductor terminal for repair or directly replace the conductor terminal with a new conductor terminal, thereby not only being beneficial to simplifying the repair operation process of the conductor terminal to improve the repair efficiency, but also being beneficial to saving the repair cost.

## Description

This application claims priority to Chinese Patent Application No. 202123391744.5 filed with the China National Intellectual Property Administration on December 29, 2021 and titled "BATTERY", the entire content of which is incorporated herein by reference.

### TECHNICAL FIELD

The present application relates to the technical field of energy storage batteries and, in particular, to a battery.

### BACKGROUND

Energy storage batteries are batteries that may be discharged and charged. With the development of science and technology, the energy storage batteries have developed rapidly and are widely used in many fields such as automobiles.

In the related art, an energy storage battery includes a battery housing and a battery cell, and the battery cell is accommodated in an accommodating cavity of the battery housing. The battery cell includes a plurality of lithium battery packs, which are combined together in series and parallel to form a total positive electrode and a total negative electrode. The battery housing is injection molded with a positive conductor terminal and a negative conductor terminal, and the total positive electrode and the total negative electrode of the battery cell are electrically connected with the positive conductor terminal and the negative conductor terminal on the battery housing, respectively, so that the battery cell can communicate with an external circuit through the conductor terminals.

However, in the related art, it is inconvenient to repair and replace the conductor terminals of the battery.

### SUMMARY

The present application provides a battery, and a conductor terminal of the battery is convenient to be disassembled and assembled, so that it is convenient to disassemble the conductor terminal of the battery for repair, or make a replacement with a new conductor terminal.

In a first aspect, the present application provides a battery including: a lower case, which is provided with an accommodating cavity with an opening; a battery cell, which is disposed within the accommodating cavity; a conductive member, which is electrically connected with the battery cell; an upper cover, which is covered on the lower case and seals the opening, and provided with a through hole, where the conductive member passes through the through hole and extends out of the accommodating cavity; and a conductor terminal, which is detachably disposed on the conductive member; where the conductor terminal includes a connection portion and an extension portion, the connection portion and the extension portion are respectively located at two ends of the conductor terminal, the connection portion is inserted into the through hole, and the extension portion extends in a direction far away from the upper cover.

The present application provides a battery, which includes a lower case, a battery cell, a conductive member, an upper cover and a conductor terminal. The lower case is provided with an accommodating cavity with an opening, the battery cell is disposed within the accommodating cavity, and the upper cover is covered on the lower case and seals the opening, so that the lower case and the upper cover can not only physically protect the battery cell to improve the impact resistance and the vibration resistance of the battery cell, but also can seal and protect the battery cell to play roles of waterproof, dustproof and the like. The conductive member is electrically connected with the battery cell, and the upper cover is provided with a through hole, and the conductor terminal is detachably disposed on the conductive member by making the conductive member pass through the through hole and extend out of the accommodating cavity, so that it is convenient to disassemble the conductor terminal for repair or to make a direct replacement with a new conductor terminal when the conductor terminal has problems, thus there is no need for repair along with disassembling of the upper cover, or for replacement along with the upper cover, thereby not only being beneficial to simplifying the repair operation process of the conductor terminal to improve the repair efficiency, but also being beneficial to saving the repair cost.

At the same time, the conductor terminal includes a connection portion and an extension portion, which are respectively located at two ends of the conductor terminal, and the connection portion is inserted into the through hole, and the extension portion extends towards a direction away from the upper cover; with such arrangement, on the one hand, the connection portion of the conductor terminal may be better electrically connected with the conductive member by inserting the connection portion of the conductor terminal into the through hole, so that the battery cell may be connected and conducted with an external circuit through the conductive member and the conductor terminal; and on the other hand, the conductor terminal may be limited by inserting the connection portion of the conductor terminal into the through hole, which is not only convenient for the installation and positioning of the conductor terminal, but also beneficial to ensuring the stability and reliability of the conductor terminal installed on the upper cover.

In the battery describe above, optionally, the conductor terminal further includes a stopping portion disposed around a periphery of the conductor terminal and located between the connection portion and the extension portion; and the stopping portion abuts against the upper cover.

In the battery describe above, optionally, at least one sealing groove is disposed between the stopping portion and the upper cover, and the sealing groove is disposed around the through hole; and a sealing ring is also disposed within each sealing groove.

In the battery describe above, optionally, the connection portion passes through the through hole, and a surface of the connection portion passing through the through hole is raised above a surface of the upper cover.

In the battery describe above, optionally, the connection portion is raised above the surface of the upper cover by a height ranging from 0.1 mm to 0.2 mm.

In the battery describe above, optionally, the connection portion is provided with a threaded hole, and the extension portion is provided with a hexagonal socket hole, and both of the threaded hole and the hexagonal socket hole extend and communicate between the two ends of the conductor terminal.

In the battery describe above, optionally, an extension length of the threaded hole ranges from 7 mm to 10 mm.

In the battery describe above, optionally, an extension length of the hexagonal socket hole ranges from 13 mm to 17 mm.

In the battery describe above, optionally, the conductive member further includes a stud and a conductive bar, a first end of the stud is connected with the conductive bar, and the conductive bar is electrically connected with the battery cell; and the conductive bar is disposed on an inner surface of the upper cover, the stud extends out of the through hole, the connection portion is provided with a threaded hole, the connection portion is threadedly connected with the stud, and a surface of the connection portion inserted into the through hole abuts against the conductive bar.

In the battery describe above, optionally, the inner surface of the upper cover is provided with a limit groove, and the conductive bar is accommodated within the limit groove.

In the battery describe above, optionally, a thickness of the conductive bar is greater than or equal to 1.2 mm.

In the battery describe above, optionally, the stud and the conductive bar are integrally formed.

In the battery describe above, optionally, a sealing member is disposed on the hexagonal socket hole.

In addition to the technical problems to be solved by the embodiments of the present disclosure, the technical features constituting the technical solutions and the beneficial effects brought by the technical features of these technical solutions described above, other technical problems to be solved by the battery provided by the embodiments of the present disclosure, other technical features included in the technical solutions and the beneficial effects brought by these technical features will be further described in detail in detailed description.

### BRIEF DESCRIPTION OF DRAWINGS

In order to more clearly explain technical solutions in embodiments of the present application or the prior art, drawings needed to be used in the description of the embodiments or the prior art will be briefly introduced below. Obviously, the drawings in the following description are some of the embodiments of the present application, and for those of ordinary skill in the art, other drawings may also be obtained from these drawings without any creative work.
FIG. 1 is a structural schematic diagram of an upper cover of a battery provided in an embodiment of the present application.
FIG. 2 is a cross-sectional view of an upper cover of a battery provided in an embodiment of the present application.
FIG. 3 is an enlarged view at A in FIG. 2.
FIG. 4 is a structural schematic diagram of a conductor terminal of a battery provided in an embodiment of the present application.
FIG. 5 is a structural schematic diagram of a conductive member of a battery provided in an embodiment of the present application.
FIG. 6 is a structural schematic diagram of a connection between a conductor terminal and a conductive member of a battery provided in an embodiment of the present application.
FIG. 7 is a schematic view of an inner surface structure of an upper cover of a battery provided in an embodiment of the present application.
FIG. 8 is a structural schematic diagram of a battery provided in an embodiment of the present application.

### DETAILED DESCRIPTION

In the related art, the energy storage battery includes a battery housing, a battery cell and a conductive member, where the battery housing includes a lower case and an upper cover, the upper cover is covered on the lower case, and the battery cell is accommodated in an accommodating cavity enclosed by the lower case and the upper cover. The battery cell includes a plurality of lithium battery packs, which are combined together in series and parallel to form a total positive electrode and a total negative electrode. The upper cover is injection-molded with a positive conductor terminal and a negative conductor terminal, and the total positive electrode and the total negative electrode of the battery cell are respectively electrically connected with the positive conductor terminal and the negative conductor terminal on the battery housing through conductive members, so that the battery cell can communicate with an external circuit through the conductor terminals.

However, because the positive conductor terminal and the negative conductor terminal are integrally molded with the upper cover of the battery housing, the conductor terminals cannot be disassembled for repair or replacement separately. When there is something wrong with a conductor terminal, the conductor terminal can only be disassembled for repair or replacement together with the upper cover, which not only leads to complicated operation and low efficiency of repair of the conductor terminal, but also is not beneficial for saving repair costs.

In order to solve the above technical problems, the present application provides a battery, which includes a lower case, a battery cell, a conductive member, an upper cover and a conductor terminal. The lower case is provided with an accommodating cavity with an opening, the battery cell is disposed within the accommodating cavity, and the upper cover is covered on the lower case and seals the opening, so that the lower case and the upper cover can not only physically protect the battery cell to improve the impact resistance and the vibration resistance of the battery cell, but also can seal and protect the battery cell to play roles of waterproof, dustproof and the like. The conductive member is electrically connected with the battery cell, and the upper cover is provided with a through hole, and the conductor terminal is detachably disposed on the conductive member by making the conductive member pass through the through hole and extend out of the accommodating cavity, so that it is convenient to disassemble the conductor terminal for repair, or make a direct replacement with a new conductor terminal when the conductor terminal has problems, thus there is no need for repair along with disassembling of the upper cover, or for replacement along with the upper cover, thereby not only being beneficial to simplifying the repair operation process of the conductor terminal to improve the repair efficiency, but also being beneficial to saving the repair cost.

At the same time, the conductor terminal includes a connection portion and an extension portion, which are respectively located at two ends of the conductor terminal, and the connection portion is inserted into the through hole, and the extension portion extends towards a direction away from the upper cover; with such arrangement, on the one hand, the connection portion of the conductor terminal may be better electrically connected with the conductive member by inserting the connection portion of the conductor terminal into the through hole, so that the battery cell may be connected and conducted with an external circuit through the conductive member and the conductor terminal; and on the other hand, the conductor terminal may be limited by inserting the connection portion of the conductor terminal into the through hole, which is not only convenient for the installation and positioning of the conductor terminal, but also beneficial to ensuring the stability and reliability of the conductor terminal installed on the upper cover.

In order to make objectives, technical solutions and advantages of embodiments of the present application clearer, the technical solutions in the embodiments of the present disclosure would be clearly and completely described below in combination with drawings in the embodiments of the present application. Obviously, the described embodiments are some of the embodiments of the present application, not all of the embodiments. Based on the embodiments of the present disclosure, all other embodiments obtained by those of ordinary skill in the art without creative work fall within the protection scope of the present application.

### Embodiment 1

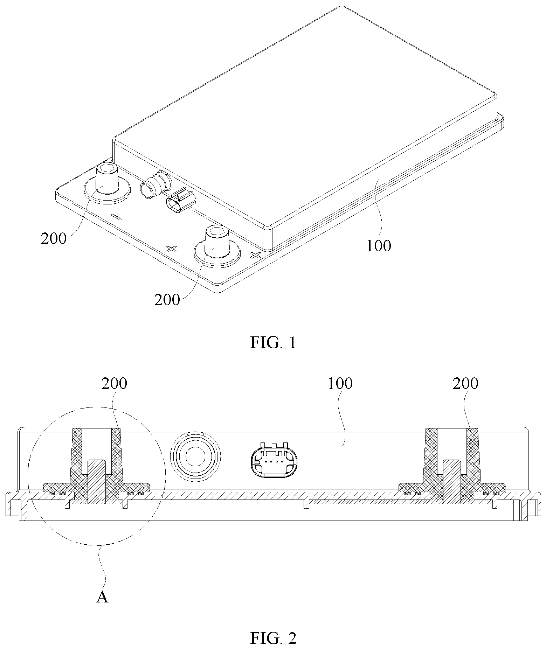

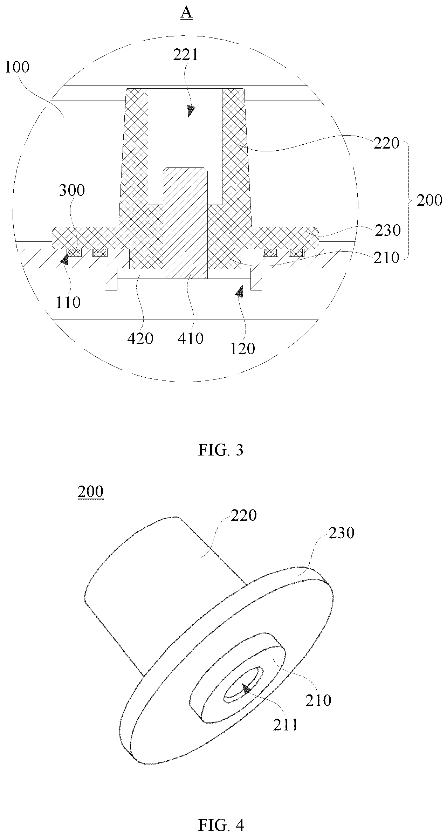

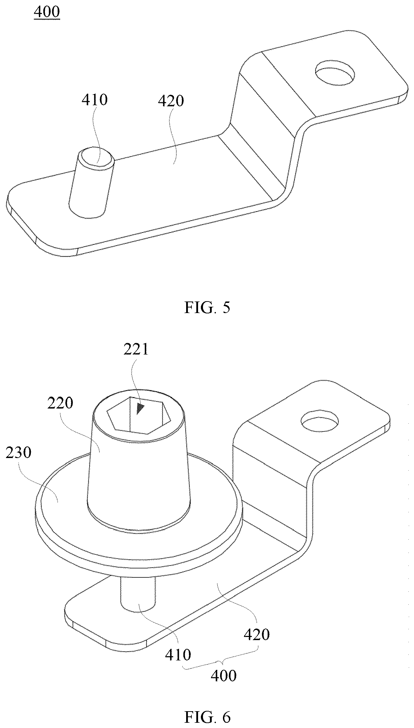

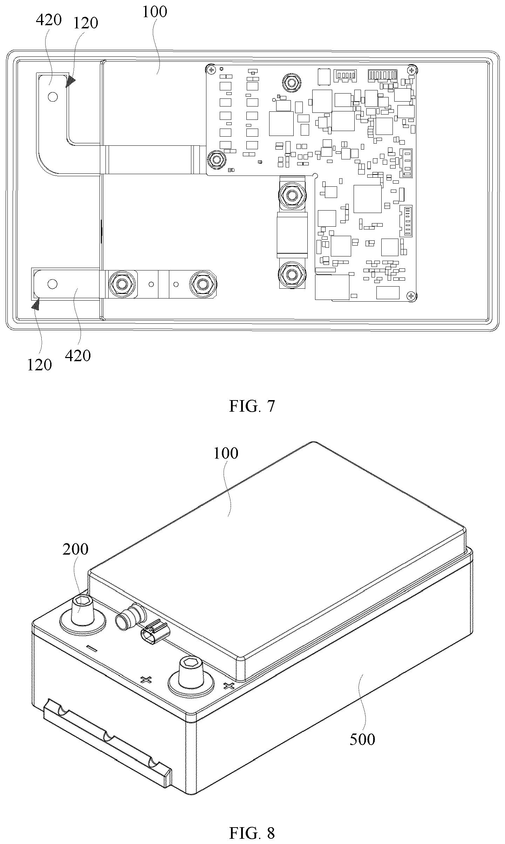

FIG. 1 is a structural schematic diagram of an upper cover of a battery provided in an embodiment of the present application; FIG. 2 is a cross-sectional view of an upper cover of a battery provided in an embodiment of the present application; FIG. 3 is an enlarged view at A in FIG. 2; FIG. 4 is a structural schematic diagram of a conductor terminal of a battery provided in an embodiment of the present application; FIG. 5 is a structural schematic diagram of a conductive member of a battery provided in an embodiment of the present application; FIG. 6 is a structural schematic diagram of a connection between a conductor terminal and a conductive member of a battery provided in an embodiment of the present application; FIG. 7 is a schematic view of an inner surface structure of an upper cover of a battery provided in an embodiment of the present application; and FIG. 8 is a structural schematic diagram of a battery provided in an embodiment of the present application.

Referring to FIG. 1 to FIG. 8, this embodiment provides a battery, which includes a lower case 500, a battery cell (not shown), a conductive member 400, an upper cover 100 and a conductor terminal 200. The lower case 500 is provided with an accommodating cavity with an opening, the battery cell is disposed within the accommodating cavity, and the upper cover 100 is covered on the lower case 500 and seals the opening.

Exemplarily, the lower case 500 may be a plastic part, and the lower case 500 may be manufactured by injection molding or compression molding. The upper cover 100 may be a plastic part, and the upper cover 100 may be manufactured by injection molding or compression molding. The upper cover 100 is covered on the lower case 500, and the upper cover 100 and the lower case 500 together enclose to form the accommodating cavity, and the battery cell is accommodated in the accommodating cavity. The upper cover 100 and the lower case 500 may not only physically protect the battery cell in the accommodating cavity to prevent the battery cell from being directly collided and impacted, but also may seal the battery cell to prevent water or water vapor from entering the accommodating cavity and affecting the quality and service life of the battery cell.

The conductive member 400 is electrically connected with the battery cell, and the upper cover 100 is provided with a through hole, the conductive member 400 passes through the through hole and extends out of the accommodating cavity, and the conductor terminal 200 is detachably disposed on the conductive member 400. Thus, when the conductor terminal 200 has problems, it is convenient to disassemble the conductor terminal 200 for repair, or make a direct replacement with a new conductor terminal 200, thus there is no need for repair along with disassembling of the upper cover 100, or for replacement along with the upper cover 100, which is not only beneficial to simplifying the repair operation process of the conductor terminal 200 to improve the repair efficiency, but also beneficial to saving the repair cost.

Exemplarily, the conductive member 400 includes a stud 410 and a conductive bar 420, one end of the stud 410 is connected with the conductive bar 420, and the conductive bar 420 is electrically connected with the battery cell; the other end of the stud 410 extends out of the through hole of the upper cover, and the conductor terminal 200 may be in a detachable threaded connection with the stud 410. The conductive bar 420 may be a copper bar or made of other materials known to those of skill in the art. The conductor terminal 200 may be a red copper part, the red copper has good conductivity and shaping, and is easy to process; and the conductor terminal 200 may also be made of other materials known to those of skill in the art, as long as it may meet the requirements of this embodiment.

Specifically, the conductor terminal 200 includes a connection portion 210 and an extension portion 220, which are respectively located at two ends of the conductor terminal 200. The connection portion 210 is inserted into the through hole to be better electrically connected with the conductive member 400; the extension portion 220 extends towards a direction away from the upper cover 100 to facilitate the electrical connection with the external circuit, so that the battery cell may be connected and conducted with the external circuit through the conductive member 400 and the conductor terminal 200. At the same time, the connection portion 210 of the conductor terminal 200 may be inserted into the through hole to limit the conductor terminal 200, which is not only convenient for the installation and positioning of the conductor terminal 200, but also beneficial to ensuring the stability and reliability of the conductor terminal 200 installed on the upper cover 100.

Exemplarily, a shape of the through hole provided in the upper cover is matched with a shape of the connection portion 210 of the conductor terminal 200, so as to stably and reliably insert the conductor terminal 200 into the through hole. Optionally, the through hole may be set in a circular shape, and the connection portion 210 of the conductor terminal 200 is in a cylindrical shape, and the through hole and the connection portion 210 of the conductor terminal 200 may also be set in other mutually matched shapes according to actual needs, as long as the requirements of this embodiment may be met.

Exemplarily, the conductor terminal 200 may be threadedly connected with the upper cover 100, so as to realize the purpose that the conductor terminal 200 is detachably disposed on the upper cover 100; or, the conductor terminal 200 may be clamped with the upper cover 100, so as to realize the purpose that the conductor terminal 200 is detachably disposed on the upper cover 100; or, the conductor terminal 200 may be threadedly connected with the conductive member 400, so as to realize the purpose that the conductor terminal 200 is detachably disposed on the upper cover 100; or, the conductor terminal 200 may be clamped with the conductive member 400, so as to realize the purpose that the conductor terminal 200 is detachably disposed on the upper cover 100. Of course, the conductor terminal 200 may also be detachably disposed on the upper cover 100 in other ways, and it is not repeated here.

It may be understood that the upper cover 100 is provided with two through holes, and there are two conductor terminals 200, and the two conductor terminals 200 are respectively installed at the two through holes, and the two conductor terminals 200 are respectively used as a positive conductor terminal and a negative conductor terminal. Positions of the two through holes on the upper cover 100 may be set according to actual needs, and it is not specifically limited here.

Referring to FIG. 1 to FIG. 4, in a possible implementation, the conductor terminal 200 further includes a stopping portion 230, which is disposed around the periphery of the conductor terminal 200 and located between the connection portion 210 and the extension portion 220. The connection portion 210, the extension portion 220 and the stopping portion 230 of the conductor terminal 200 are integrally formed. Exemplarily, the conductor terminal 200 is in a cylindrical shape or a truncated cone shape, and the stopping portion 230 may be in a circular ring shape, or a square ring shape, or may be other shaped rings.

The stopping portion 230 abuts against the upper cover 100. Exemplarily, a surface of the stopping portion 230 facing away from the extension portion 220 abuts against an annular region of the upper cover 100 around the through hole. It may be understood that an outer diameter of the stopping portion 230 is larger than a diameter of the through hole of the upper cover 100, so that after the connection portion 210 of the conductor terminal 200 extends into the through hole, the stopping portion 230 is lapped on the annular region around the through hole of the upper cover 100, so that the stopping portion 230 may not only limit a length of the connection portion 210 of the conductor terminal 200 extending into the through hole, but also cover and seal edges of the through hole and the connection portion 210, so as to protect the battery cell in the accommodating cavity.

Referring to FIG. 2 and FIG. 3, at least one sealing groove 110 is disposed between the stopping portion 230 and the upper cover 100, and the sealing groove 110 is disposed around the through hole. Exemplarily, the sealing groove 110 may be disposed on a surface of the stopping portion 230 facing the upper cover 100 or on a surface of the upper cover 100 facing the stopping portion 230. A sealing ring 300 is also disposed in each sealing groove 110. Exemplarily, one sealing ring 300 or two or more sealing rings 300 may be disposed in each sealing groove 110.

In a possible implementation, a surface of the upper cover 100 facing the stopping portion 230 is provided with a sealing groove 110, and the sealing groove 110 is disposed around the through hole. A sealing ring 300 is disposed in the sealing groove 110, so that a gap between the upper cover 100 and the conductor terminal 200 can be better sealed to ensure the tightness of the upper cover 100.

In another possible implementation, a surface of the upper cover 100 facing the stopping portion 230 is provided with two sealing grooves 110, and both of the sealing grooves 110 are disposed around the through hole, where one sealing groove 110 is disposed around between the other sealing groove 110 and the through hole, there is an interval between the two sealing grooves 110, and a sealing ring 300 is disposed in each of the two sealing grooves 110. Thus, when one sealing ring 300 is failure, the other sealing ring 300 may continue to maintain the tightness between the upper cover 100 and the conductor terminal 200.

Optionally, a compression amount of the sealing ring 300 is designed in a range of 30% to 50%, for example, the compression amount of the sealing ring 300 may be set to 30%, 35%, 40%, 45% or 50% according to actual needs.

With continued reference to FIG. 2 and FIG. 3, in a possible implementation, the connection portion 210 passes through the through hole of the upper cover 100, and a surface of the connection portion 210 passing through the through hole is raised above a surface of the upper cover 100.

On the one hand, the connection portion 210 may pass through the through hole to be directly contacted and conducted with the conductive bar 420 on the inner side of the through hole, which is beneficial to ensuring the reliability of conduction between the conductor terminal 200 and the conductive bar 420 and the overcurrent capability between the conductor terminal 200 and the conductive bar 420. It may be understood that an area of a surface of the connection portion 210 facing away from the extension portion 220 may be designed according to the overcurrent capacity, and at the same time, a size of the through hole of the upper cover 100 may be designed according to a size of the connection portion 210. On the other hand, when the connection portion 210 is threadedly connected with the stud 410, the conductive bar 420 may be prevented from contacting with the upper cover 100 made of plastic material, so as to prevent torque attenuation.

Optionally, the connection portion 210 is raised above the surface of the upper cover 100 by a height ranging from 0.1 mm to 0.2 mm. That is, after the connection portion 210 of the conductor terminal 200 extends into the through hole from an outer surface of the upper cover 100, the connection portion 210 extends out of an inner surface of the upper cover 100 by a length ranging from 0.1 mm to 0.2 mm, where the outer surface of the upper cover 100 refers to a surface of the upper cover 100 facing away from the battery cell, and the inner surface of the upper cover 100 refers to a surface of the upper cover 100 facing the battery cell.

Exemplarily, the height of the connection portion 210 above the surface of the upper cover 100 may be set to 0.1 mm, 0.12 mm, 0.14 mm, 0.16 mm, 0.18 mm or 0.2 mm according to actual needs. On the one hand, the connection portion 210 can be prevented from extending out of the inner surface of the upper cover 100 by a length that is too long, which causes a relatively large space occupation to the accommodating cavity; and on the other hand, the connection portion 210 can be prevented from extending out of the inner surface of the upper cover 100 by a length that is too short, which causes the conductive bar 420 to contact the upper cover 100 made of plastic material.

Referring to FIG. 2 to FIG. 4, in a possible implementation, the connection portion 210 is provided with a threaded hole 211, and the extension portion 220 is provided with an hexagonal socket hole 221, both of the threaded hole 211 and the hexagonal socket hole 221 extend and communicate between two ends of the conductor terminal 200. Thus, a hexagonal socket tool may be inserted into the hexagonal socket hole 221 of the extension portion 220 to screw and tighten the conductor terminal 200 with the stud 410 hereinafter. The installation operation of the conductor terminal 200 is simple and quick, which is convenient for disassembly and assembly, and high in efficiency. At the same time, the threaded hole 211 is communicated with the hexagonal socket hole 221, so that when a length of the stud 410 is relatively long, the stud 410 may extend into the hexagonal socket hole 221 to ensure that the conductor terminal 200 and the stud 410 are connected in place.

Optionally, after the installation of the conductor terminal 200 is completed, a sealing member may be disposed on the hexagonal socket hole 221, for example, the hexagonal socket hole 221 is filled with structural sealant, or other sealing members may be disposed in the hexagonal socket hole 221, so that not only the reliability of the connection between the conductor terminal 200 and the stud 410 can be ensured, but also the tightness of the connection between the conductor terminal 200 and the stud 410 can be ensured.

Optionally, an extension length of the threaded hole 211 ranges from 7 mm to 10 mm. Exemplarily, the extension length of the threaded hole 211 may be set to 7 mm, 7.5 mm, 8 mm, 8.5 mm, 9 mm, 9.5 mm or 10 mm according to actual needs.

Optionally, an extension length of the hexagonal socket hole 221 ranges from 13 mm to 17 mm. Exemplarily, the extension length of the hexagonal socket hole 221 may be set to 13 mm, 13.5 mm, 14 mm, 14.5 mm, 15 mm, 15.5 mm, 16 mm, 16.5 mm or 17 mm according to actual needs.

Referring to FIG. 2, FIG. 3, FIG. 5, FIG. 6 and FIG. 7, exemplarily, the stud 410 and the conductive bar 420 may be integrally formed, or, the stud 410 and the conductive bar 420 may be connected together by means of, for example, welding, riveting, etc. after being processed separately, or, the stud 410 and the conductive bar 420 may directly abut against each other to realize conduction.

The conductive bar 420 is disposed on an inner surface of the upper cover 100, the stud 410 extends into the through hole, the connection portion 210 is threadedly connected with the stud 410, and the surface of the connection portion 210 facing away from the extension portion 220 abuts against the conductive bar 420 surrounding the stud 410, thereby ensuring the overcurrent capacity between the conductive bar 420 and the conductor terminal 200. Exemplarily, the stud 410 is disposed at one end of the conductive bar 420, and the other end of the conductive bar 420 is used for direct or indirect electrical connection with the total positive electrode or the total negative electrode of the battery cell.

Referring to FIG. 7, in a possible implementation, the inner surface of the upper cover 100 is provided with a limit groove 120, and the conductive bar 420 is accommodated in the limit groove 120. Exemplarily, the limit groove 120 may be enclosed by ribs disposed on the inner surface of the upper cover 100; or, the limit groove 120 may be formed by recessing the inner surface of the upper cover 100. The limit groove 120 may limit the conductive bar 420 accommodated in the limit groove 120 to prevent the conductive bar 420 from rotating when the conductor terminal 200 is locked, so that not only the installation effect of the conductor terminal 200 can be ensured, but also an installation position of the conductive bar 420 can be ensured to meet the requirements.

Optionally, a thickness of the conductive bar 420 is greater than or equal to 1.2 mm. Exemplarily, the thickness of the conductive bar 420 may be set to 1.2 mm, 1.4 mm, 1.6 mm, 1.8 mm, 2 mm, 2.2 mm or 2.4 mm according to overcurrent requirements of the conductive bar 420.

To sum up, a battery provided in this embodiment includes a lower case 500, a battery cell, a conductive member 400, an upper cover 100 and a conductor terminal 200. The lower case 500 is provided with an accommodating cavity with an opening, and the battery cell is disposed within the accommodating cavity, and the upper cover 100 is covered on the lower case 500 to seal the opening, so that the lower case 500 and the upper cover 100 can not only physically protect the battery cells to improve the impact resistance and vibration resistance of the battery cell, but also can seal and protect the battery cell, so as to play the roles of waterproof, dustproof and the like. The conductive member 400 is electrically connected with the battery cell, and the upper cover 100 is provided with a through hole. The conductive member 400 passes through the through hole and extends out of the accommodating cavity, and the conductor terminal 200 is detachably disposed on the conductive member 400, so that when the conductor terminal 200 has problems, it is convenient to disassemble the conductor terminal 200 for repair, or make a direct replacement with a new conductor terminal 200, thus there is no need for repair along with disassembling of the upper cover 100, or for replacement along with the upper cover 100, thereby not only being beneficial to simplifying the repair operation process of the conductor terminal to improve the repair efficiency, but also being beneficial to saving the repair cost.

At the same time, the conductor terminal 200 includes a connection portion 210 and an extension portion 220, which are located at two ends of the conductor terminal 200, respectively, the connection portion 210 is inserted into the through hole, and the extension portion 220 extends in a direction away from the upper cover 100; with such arrangement, on the one hand, the connection portion 210 of the conductor terminal 200 may be better electrically connected with the conductive member 400 by being inserted into the through hole, so that the battery cell can be connected and conducted with the external circuit through the conductive member 400 and the conductor terminal 200, and on the other hand, the conductor terminal 200 may be limited by inserting the connection portion 210 of the conductor terminal 200 into the through hole, which is not only convenient to the installation and positioning of the conductor terminal 200, but also beneficial to ensuring the stability and reliability of the installation of the conductor terminal 200 on the upper cover 100.

In the description of the present application, it should be noted that, unless otherwise expressly specified and defined, terms "install", "connect", "connecting" and "connected" should be understood in a broad sense, for example, it may be a fixed connection, a detachable connection; it may be in contact with each other, but also may be an integral part; it may be a mechanical connection or an electrical connection; it may be directly connected, indirectly connected through an intermediate medium, or communicated inside two elements. For those of ordinary skill in the art, the specific meanings of the above terms in the present application may be understood through specific situations.

Terms "first" and "second" as used in the specification and claims and the above description of the drawings of the present application are used to distinguish similar objects, and are not necessarily used to describe a specific order or sequence. It should be understood that data thus used may be interchanged in appropriate cases, such that the embodiments of the present application described herein can, for example, be practiced in an order other than those illustrated or described herein.

Finally, it should be noted that the above embodiments are only used to illustrate the technical solutions of the present application, but not to limit them; although the present application is illustrated in detail with reference to the above embodiments, those of ordinary skill in the art should understand that the technical solutions described in the above embodiments may still be modified or some or all of the technical features therein may be equivalently replaced; and these modifications or replacements do not make the essence of the corresponding technical solutions deviate from the scope of the technical solutions of the embodiments of the present application.

## Claims

1. A battery, comprising:
a lower case, which is provided with an accommodating cavity with an opening;
a battery cell, which is disposed within the accommodating cavity;
a conductive member, which is electrically connected with the battery cell;
an upper cover, which is covered on the lower case and seals the opening, and provided with a through hole; wherein the conductive member passes through the through hole and extends out of the accommodating cavity; and
a conductor terminal, which is detachably disposed on the conductive member;
wherein the conductor terminal comprises a connection portion and an extension portion, the connection portion and the extension portion are respectively located at two ends of the conductor terminal, the connection portion is inserted into the through hole, and the extension portion extends in a direction far away from the upper cover.

2. The battery according to claim 1, wherein the conductor terminal further comprises a stopping portion disposed around a periphery of the conductor terminal and located between the connection portion and the extension portion; and
the stopping portion abuts against the upper cover.

3. The battery according to claim 2, wherein at least one sealing groove is disposed between the stopping portion and the upper cover, and the sealing groove is disposed around the through hole; and
a sealing ring is further disposed within each sealing groove.

4. The battery according to claim 2, wherein the connection portion passes through the through hole, and a surface of the connection portion passing through the through hole is raised above a surface of the upper cover.

5. The battery according to claim 4, wherein the connection portion is raised above the surface of the upper cover by a height ranging from 0.1 mm to 0.2 mm.

6. The battery according to any one of claims 1 to 5, wherein the connection portion is provided with a threaded hole, and the extension portion is provided with a hexagonal socket hole, and both of the threaded hole and the hexagonal socket hole extend and communicate between the two ends of the conductor terminal.

7. The battery according to claim 6, wherein an extension length of the threaded hole ranges from 7 mm to 10 mm; and/or,
an extension length of the hexagonal socket hole ranges from 13 mm to 17 mm.

8. The battery according to claim 1, wherein the conductive member comprises a stud and a conductive bar, one end of the stud is connected with the conductive bar, and the conductive bar is electrically connected with the battery cell; and
the conductive bar is disposed on an inner surface of the upper cover, the other end of the stud extends out of the through hole, the connection portion is provided with a threaded hole, the connection portion is threadedly connected with the stud, and a surface of the connection portion inserted into the through hole abuts against the conductive bar.

9. The battery according to claim 8, wherein the inner surface of the upper cover is provided with a limit groove, and the conductive bar is accommodated within the limit groove; and/or,
a thickness of the conductive bar is greater than or equal to 1.2 mm; and/or,
the stud and the conductive bar are integrally formed.

10. The battery according to claim 6, wherein a sealing member is disposed on the hexagonal socket hole.
